# EUROPÄISCHE PATENTANMELDUNG

(11) **EP 4 729 769 A1**
(43) Veröffentlichungstag der Anmeldung: **22.04.2026**
(21) Anmeldenummer: 25202620.8
(22) Anmeldetag: 17.09.2025
(51) Int. Cl.: F03D 15/00, F16H 1/48

(54) **GETRIEBEANORDNUNG UND WINDKRAFTANLAGE**

(30) Priorität: 15.10.2024 DE 102024209977
(71) Anmelder: ZF Friedrichshafen AG, 88046 Friedrichshafen (DE); ZF Wind Power Antwerpen NV, 3920 Lommel (BE)
(72) Erfinder: De Laet, Wim, 2000 Antwerpen (BE); Beirinckx, Bert, 2180 Ekeren (BE)
(74) Vertreter: ZF Friedrichshafen AG

(57) **Zusammenfassung**

Die Erfindung betrifft eine Getriebeanordnung für eine Windkraftanlage (10) mit einem Getriebe (22). Eine Welle (40) des Getriebes (22) ist mit einer weiteren Welle (16) der Windkraftanlage (10) in einem montierten Zustand der Windkraftanlage (10) durch eine formschlüssige Verbindung permanent drehfest verbunden. Die Getriebeanordnung weist eine Spannvorrichtung (60) auf, welche dazu ausgebildet ist, ein Spiel wenigstens in einem Teilbereich der formschlüssigen Verbindung aufzuheben. Zudem bezieht sich die Erfindung auf eine Windkraftanlage (10).

## Beschreibung

Die vorliegende Erfindung bezieht sich auf eine Getriebeanordnung für eine Windkraftanlage. Zudem bezieht sich die Erfindung auf eine Windkraftanlage.

### Stand der Technik

Windkraftanlagen dienen dazu, aus Windenergie Elektrizität zu erzeugen. Zu diesem Zweck weisen Windkraftanlagen einen Rotor auf. Eine Drehgeschwindigkeit des Rotors wird von einer Rotorwelle an ein Getriebe übertragen. Die Drehgeschwindigkeit der Rotorwelle wird durch das Getriebe in eine geeignete Drehzahl übersetzt, um einen Generator anzutreiben. Aufgrund ihrer Größe werden moderne Windkraftanlagen üblicherweise in mehreren Teilen an den Aufstellungsort transportiert und erst vor Ort aneinander montiert. Eine Rotorwellenanordnung und das Getriebe sind beispielsweise vor einer Endmontage getrennte Baugruppen. Eine Eingangswelle des Getriebes und die Rotorwelle werden deshalb oft erst bei einem Aufbau der Windkraftanlage miteinander verbunden. Eine solche Verbindung kann eine Spielpassung haben, wodurch die Montage einfach sein kann. Im Betrieb können sich die Rotorwelle und die Eingangswelle des Getriebes aber zumindest geringfügig zueinander bewegen, wodurch es zu Lageabweichungen und erhöhtem Verschleiß kommen kann. Dies kann durch eine Presspassung vermieden werden, welche aber schwierig zu montieren ist.

### Darstellung der Erfindung

Ein erster Aspekt betrifft eine Getriebeanordnung für eine Windkraftanlage. Die Windkraftanlage kann beispielsweise einen Rotor und einen Generator aufweisen. Der Rotor kann über das Getriebe den Generator antreiben, um elektrische Energie zu erzeugen. Der Rotor ist beispielsweise mit dem Getriebe über eine Rotorwelle verbunden. Der Rotor, das Getriebe und der Generator können beispielsweise an einer Gondel der Windkraftanlage befestigt sein. Die Gondel kann beispielsweise drehfest oder drehbar auf einem Turm montiert sein. Der Rotor kann eine horizontale oder eine vertikale Drehachse aufweisen. Der Rotor kann beispielsweise zwei, drei, vier oder mehr Rotorblätter aufweisen, welche über eine Nabe mit der Rotorwelle verbunden sind.

Die Getriebeanordnung weist ein Getriebe auf. Das Getriebe kann ein Getriebegehäuse aufweisen. Das Getriebegehäuse kann beispielsweise ein oder mehrere Gehäuseelemente aufweisen. Das Getriebegehäuse kann einen Innenraum ausbilden. Das Getriebegehäuse kann in der Gondel der Windkraftanlage befestigt sein. Das Getriebe kann einen Antrieb und einen Abtrieb aufweisen. Der Antrieb ist beispielsweise mit dem Rotor mechanisch wirkverbunden und der Abtrieb mit dem Generator. Das Getriebe kann eine Eingangswelle aufweisen. Die Eingangswelle kann den Antrieb des Getriebes ausbilden. Das Getriebe kann dazu ausgebildet sein, ein Drehmoment von der Rotorwelle der Windkraftanlage an einen Generator zu übertragen. Das Getriebe kann eine Ausgangswelle aufweisen. Die Ausgangswelle kann den Abtrieb des Getriebes bilden. Das Getriebe weist eine Welle auf, welche beispielsweise durch die Eingangswelle oder Ausgangswelle gebildet sein kann. Die Getriebeanordnung weist eine weitere Welle auf, welche mit dieser Welle permanent drehfest verbunden ist. Die weitere Welle kann beispielsweise durch die Rotorwelle, eine Eingangswelle der Bremse oder eine weitere Welle des Generators gebildet sein.

Die Welle des Getriebes ist mit der weiteren Welle der Windkraftanlage in einem montierten Zustand der Windkraftanlage durch eine formschlüssige Verbindung permanent drehfest verbunden. Die formschlüssige Verbindung kann beispielsweise durch in Umfangsrichtung bei der Drehmomentübertragung aneinander anliegende korrespondierende Flächen der beiden Wellen gebildet werden. Dadurch kann im bestimmungsgemäßen Gebrauch jede Drehbewegung der einen Welle in einer korrespondierenden Drehbewegung der anderen Welle resultieren. Die beiden Wellen sind beispielsweise koaxial angeordnet. Die formschlüssige Verbindung kann beispielsweise für die Drehmomentübertragung zwischen den beiden Wellen ausgebildet sein. Die beiden Wellen können zusätzlich aneinander gesichert sein. Zudem kann es auch eine axiale Fixierung geben. Die formschlüssige Verbindung wird beispielsweise durch Einstecken oder Einpressen der Wellen ineinander hergestellt. Zusätzlich können die beiden Wellen dann beispielsweise noch miteinander verschraubt werden.

Das Getriebe weist beispielsweise einen in einem Innenraum des Getriebegehäuses angeordneten Planetenradsatz oder Stirnradsatz auf. Ein Planetenradsatz ist beispielsweise als Minus-Planetenradsatz oder Plus-Planetenradsatz ausgebildet. Ein Planetenradsatz weist beispielsweise ein Sonnenrad, einen Planetenträger und ein Hohlrad auf. Die Sonnenräder, Planetenträger und Hohlräder eines Planetenradsatzes bilden beispielsweise dessen Drehelemente. Jeder Planetenradsatz kann ein oder mehrere Planetenräder aufweisen, welche drehbar an dem Planetenträger befestigt sind. Die Planetenräder können an dem Planetenträger über Planetenbolzen gelagert sein. Die Planetenbolzen können zu einem Trägerelement separat oder integral ausgebildet sein. Die Planetenräder können an den Planetenbolzen drehbar gelagert sein. Die Planetenbolzen können alternativ oder zusätzlich drehbar an dem Trägerelement gelagert sein. Beispielsweise kämmen die Planetenräder eines Planetenradsatzes jeweils mit einem Sonnenrad und einem Hohlrad eines Planetenradsatzes. Eine Drehachse eines Planetenradsatzes kann einer Drehachse der Drehelemente entsprechen. Jeweilige Planetenradsätze können beispielsweise koaxial mit der Rotorwelle angeordnet sein.

Ein rotorseitiger Planetenträger des Planetenradsatzes kann beispielsweise einen Antrieb des Getriebes ausbilden. Der Planetenträger kann eine der beiden Wellen bilden. Der Planetenträger kann die Eingangswelle des Getriebes ausbilden. Der Planetenträger kann einteilig oder mehrteilig ausgebildet sein. Die Rotorwelle kann einteilig oder mehrteilig ausgebildet sein. Beispielsweise weist der Planetenträger an seinem im montierten Zustand dem Rotor zugewandten Ende ein axiales Wellenstück auf. Beispielsweise kann der Planetenträger in der montierten Windkraftanlage dort permanent drehfest mit der Rotorwelle verbunden sein. Beispielsweise können die beiden Wellen zueinander korrespondierende Verzahnungen aufweisen, über welche die beiden Wellen miteinander eingreifen. Die Rotorwelle und der Planetenträger können koaxial angeordnet sein. Das Hohlrad oder Sonnenrad kann beispielsweise den Abtrieb des Getriebes ausbilden. Das Getriebe kann auch mehrere Planetenradsätze aufweisen, welche miteinander mechanisch wirkverbunden sind. Beispielsweise kann der Abtrieb auch durch ein Drehelement eines zweiten Planetenradsatzes ausgebildet sein. Planetenradsätze können bauraumsparend hohe Übersetzungen bereitstellen und hohen Drehmomenten gut widerstehen.

Die Getriebeanordnung weist eine Spannvorrichtung auf. Die Spannvorrichtung ist dazu ausgebildet, ein Spiel wenigstens in einem Teilbereich der formschlüssigen Verbindung aufzuheben. Beispielsweise kann das Spiel zwischen den zwei Wellen in dem entsprechenden Teilbereich erst nach der Anordnung der beiden Wellen aneinander aufgehoben werden. Dadurch kann die Montage vereinfacht sein und trotzdem eine hohe Lebensdauer des Getriebes erzielt werden. Beispielsweise kann das Aufheben des Spiels eine komplette oder teilweise Beseitigung des Spiels sein. Beispielsweise kann das Spiel nur reduziert werden oder durch die Spannvorrichtung auch eine Presspassung hergestellt werden. Das Spiel kann nur in dem Teilbereich der formschlüssigen Verbindung oder überall in der formschlüssigen Verbindung aufgehoben werden. Durch das Aufheben des Spiels können bestimmte Flächen der beiden Wellen in Anlage gebracht werden, beispielsweise auch wenn die Windkraftanlage gerade nicht in Betrieb ist und alternativ oder zusätzlich gerade kein Drehmoment übertragen wird.

Durch das Aufheben des Spiels können bestimmte Flächen der beiden Wellen gegeneinander gepresst werden. Das Aufheben des Spiels erfolgt beispielsweise durch eine elastische und alternativ oder zusätzlich plastische Verformung von einer der beiden radial an der Spannvorrichtung anliegenden Wellen. Beispielsweise kann die Spannvorrichtung radial innen an der Welle des Getriebes anliegend angeordnet sein und diese Welle radial nach außen gegen die weitere Welle drücken. Beispielsweise kann die Spannvorrichtung radial innen an der Rotorwelle anliegend angeordnet sein und die Rotorwelle radial nach außen gegen die Eingangswelle des Getriebes drücken. Beispielsweise kann die Spannvorrichtung radial außen an der Eingangswelle des Getriebes anliegend angeordnet sein und die Eingangswelle des Getriebes radial nach innen gegen die Rotorwelle drücken. Beispielsweise kann die Spannvorrichtung radial außen an der Rotorwelle anliegend angeordnet sein und die Rotorwelle radial nach innen gegen die Eingangswelle des Getriebes drücken.

Entsprechend kann ein Verbindungsbereich der einen Welle radial innen oder außen zu einem korrespondierenden Verbindungsbereich der anderen Welle angeordnet sein.

Die Spannvorrichtung kann beispielsweise zwischen einem Ausgangszustand und einem Spannzustand verstellbar sein. **In** dem Ausgangszustand verformt die Spannvorrichtung beispielsweise keine der beiden Wellen. Die Spannvorrichtung kann so einfach montiert sein, beispielsweise durch ein Einsetzen in eine der beiden Wellen oder ein Aufschieben auf eine der beiden Wellen. **In** dem Spannzustand drückt die Spannvorrichtung beispielsweise gegen einen Abschnitt einer der Wellen und hebt so das Spiel in dem Teilbereich der formschlüssigen Verbindung zumindest teilweise oder vollständig auf. Die Spannvorrichtung kann in dem Spannzustand klemmend in der Getriebeanordnung gehalten sein oder auch zusätzlich gesichert sein, beispielsweise durch eine Verschraubung. Die Spannvorrichtung kann stufenlos oder stufenartig verstellbar sein. Beispielsweise kann so eine Kraft einstellbar sein, mit welcher die Spannvorrichtung gegen die anliegende der beiden Wellen presst und so das Spiel in der formschlüssigen Verbindung aufhebt. Die Spannvorrichtung kann beispielsweise für eine mechanische oder hydraulische Verstellbarkeit ausgebildet sein. Die hydraulische Verstellbarkeit kann besonders schnell sein und einfach hohe Kräfte aufbringen. Die hydraulische Verstellbarkeit ist so besonders geeignet für Validierungsversuche. Die mechanische Verstellbarkeit kann sehr kostengünstig sein. Die mechanische Verstellbarkeit ist so besonders geeignet für Serienprodukte. Das Verstellen in den Spannzustand erfolgt beispielsweise, nachdem die beiden Wellen aneinander positioniert wurden. Davor kann eine radiale Zentrierung erfolgen und auch eine axiale Position relativ zueinander vorgegeben werden. Die formschlüssige Verbindung wird beispielsweise zuerst hergestellt und kann dann bereits ein Drehmoment übertragen. Anschließend erfolgt erst das Verstellen in den Spannzustand, um das Spiel aufzuheben.

**In** einer Ausführungsform der Getriebeanordnung kann es vorgesehen sein, dass die formschlüssige Verbindung durch korrespondierende Verzahnungen der beiden Wellen ausgebildet wird. Beispielsweise kann die Eingangswelle eine radial an einem Außenumfang ausgebildete Verzahnung aufweisen. Beispielsweise kann die Rotorwelle eine radial an einem Innenumfang ausgebildete Verzahnung aufweisen. Das Drehmoment wird beispielsweise über jeweils anliegende Zahnflanken übertragen. Die Verzahnungen können beispielsweise als Steckverzahnungen ausgebildet sein. Die Verzahnung kann eine einfache Montage der beiden Wellen aneinander und eine Übertragung von hohen Drehmomenten erlauben. Zudem kann eine teilweise Abstützung gegen ein Verkippen durch die Verzahnung bereitgestellt werden. Die Verzahnungen können auch als zueinander zugewandte stirnseitige Verzahnungen ausgebildet sein.

In einer Ausführungsform der Getriebeanordnung kann es vorgesehen sein, dass die Spannvorrichtung dazu ausgebildet ist, das Spiel wenigstens im Bereich von aneinander in Umfangsrichtung benachbarten Zahnflanken der korrespondierenden Verzahnungen aufzuheben. Beispielsweise wird ein Durchmesser der Welle des Getriebes durch die Spannvorrichtung aufgeweitet und drückt so die Zahnflanken in Anlage mit den Zahnflanken der weiteren Welle der Windkraftanlage. Jeweilige Kopfbereiche und Fußbereiche der Zähne können noch ein Spiel zueinander aufweisen. Dadurch können geringfügige Verkippungen erlaubt werden, was bei bestimmten Lagerungskonzepten der jeweiligen Wellen des Getriebes unerwünschte Verspannungen vermeiden kann. Die Verkippung kann aber auch durch das Aufheben des Spiels unterdrückt werden. Ein Spiel zwischen jeweiligen Kopfbereichen und Fußbereichen der Zähne kann ebenfalls aufgehoben werden, womit die Verbindung zwischen den beiden Wellen besonders steif sein kann. Beispielsweise kann so eine Lage der Eingangswelle besonders gut vorgegeben werden, wenn diese nur an der Rotorwelle gelagert ist. Zudem können so jeweilige Verbiegungen der Rotorwelle und durch die Rotorwelle eingeleitete Querkräfte besonders gut aufgenommen werden.

In einer Ausführungsform der Getriebeanordnung kann es vorgesehen sein, dass die Spannvorrichtung dazu ausgebildet ist, gegen diejenige der beiden Wellen zu pressen, welche radial benachbart zu der Spannvorrichtung angeordnet ist. Das Pressen kann radial nach außen oder innen erfolgen. Beispielsweise kann eine der beiden Wellen mit der Spannvorrichtung radial kontaktiert sein, welche dann die radial benachbarte dieser beiden Wellen ist. Die andere der beiden Wellen kann radial beabstandet sein. Beispielsweise kann die Spannvorrichtung mit einem Außendurchmesser an einem Innendurchmesser der Eingangswelle anliegen, welche dann radial benachbart zu der Spannvorrichtung ist. Die Eingangswelle kann zumindest im Bereich der formschlüssigen Verbindung der beiden Wellen miteinander radial außenseitig zu der Rotorwelle angeordnet und damit zu der Spannvorrichtung radial beabstandet sein.

In einer Ausführungsform der Getriebeanordnung kann es vorgesehen sein, dass die Spannvorrichtung eine Expansionsbuchse aufweist. Die Expansionsbuchse kann für ein Aufweiten ausgebildet sein. Die Expansionsbuchse kann einen veränderlichen Außendurchmesser und alternativ oder zusätzlich einen veränderlichen Innendurchmesser aufweisen. Die Expansionsbuchse kann beispielsweise hydraulisch oder mechanisch verstellbar sein. Beispielsweise kann die Expansionsbuchse axial verschiebbare Keilringe aufweisen, wobei durch deren Position eine Dicke der Expansionsbuchse und damit auch deren Außendurchmesser und alternativ oder zusätzlich deren Innendurchmesser veränderbar ist. Eine Expansionsbuchse kann kostengünstig sein und beispielsweise hohen Lasten widerstehen. Zudem kann mit einer Expansionsbuchse eine starke Verformung einer der beiden Wellen mit geringem Kraftaufwand bewirkt werden. Die Expansionsbuchse kann axial im Bereich der formschlüssigen Verbindung angeordnet sein.

In einer Ausführungsform der Getriebeanordnung kann es vorgesehen sein, dass die Expansionsbuchse radial innen zu den beiden Wellen angeordnet ist. Die Expansionsbuchse kann so die Eingangswelle und alternativ oder zusätzlich die Rotorwelle einfach verformen, um das Spiel aufzuheben. Beispielsweise kann die Expansionsbuchse radial innen an der Eingangswelle anliegen. Die Rotorwelle kann im Bereich der formschlüssigen Verbindung radial außen zu der Eingangswelle angeordnet sein. Die Expansionsbuchse kann radial außen oder innen zu der Welle des Getriebes und alternativ oder zusätzlich zu der weiteren Welle der Windkraftanlage angeordnet sein.

In einer Ausführungsform der Getriebeanordnung kann es vorgesehen sein, dass die formschlüssige Verbindung wenigstens in dem Teilbereich, in welchem beispielsweise das Spiel durch die Spannvorrichtung aufhebbar ist, als eine Spielpassung ausgebildet ist. Bei einer Spielpassung kann es trotz Toleranzen beispielsweise immer ein Spiel zwischen den jeweiligen Passflächen der formschlüssigen Verbindung der beiden Wellen geben. Dadurch kann die Montage sehr einfach sein. Beispielsweise kann in Umfangsrichtung an jeweiligen Zahnflanken eine Spielpassung vorgesehen sein. Insgesamt kann die formschlüssige Verbindung als Spielpassung ausgebildet sein. Alternativ kann es vorgesehen sein, dass die formschlüssige Verbindung wenigstens in dem Teilbereich, in welchem beispielsweise das Spiel durch die Spannvorrichtung aufhebbar ist, als eine Übergangspassung oder Presspassung ausgebildet ist. Dann kann die Pressung durch die Spannvorrichtung verstärkt werden. Somit kann durch das Aufheben des Spiels auch ein Betrag einer Pressung vergrößert werden. Dann kann die Montage immer noch einfacher sein, als wenn direkt mit einer für den Betrieb gewünschten Presspassung oder Übergangspassung montiert wird. Nach dem Verstellen der Spannvorrichtung in den Spannzustand kann beispielsweise immer eine Presspassung vorliegen. Diese Presspassung kann dann aber durch die Spannvorrichtung verursacht sein statt durch Fertigungstoleranzen und eine Geometrie der Eingangswelle und der Rotorwelle im Bereich der formschlüssigen Verbindung.

In einer Ausführungsform der Getriebeanordnung kann es vorgesehen sein, dass die Getriebeanordnung eine radiale Zentrierung für eine radial zentrierte Positionierung der beiden Wellen relativ zueinander aufweist. Beispielsweise kann so eine radiale Zentrierung der Eingangswelle relativ zu der Rotorwelle bei der Montage vorgegeben oder zumindest vereinfacht sein. Eine radiale Zentrierung kann eine gewünschte koaxiale Ausrichtung sein. Durch die radiale Zentrierung kann eine ungleichmäßige Pressung durch die Spannvorrichtung vermieden werden. Das radiale Zentrieren kann beispielsweise vor dem Verstellen der Spannvorrichtung in den Spannzustand und alternativ oder zusätzlich vor dem Fixieren der Wellen aneinander erfolgen. Die radiale Zentrierung kann beispielsweise durch korrespondierende Absätze an den beiden Wellen ausgebildet werden. Dadurch können beispielsweise in Umfangsrichtung verlaufende radial nach außen und innen weisende Anlageflächen ausgebildet werden. Die radiale Zentrierung kann beispielsweise axial im Bereich der Spannvorrichtung, der formschlüssigen Verbindung und alternativ oder zusätzlich einer Sicherung der beiden Wellen aneinander ausgebildet sein. Dort können die beiden Wellen bereits eine große Wandstärke aufweisen, wodurch die radiale Zentrierung einfach integrierbar ist.

In einer Ausführungsform der Getriebeanordnung kann es vorgesehen sein, dass die Getriebeanordnung einen Anschlag für eine axial definierte Positionierung beiden Wellen relativ zueinander aufweist. Beispielsweise kann so eine axiale Position der Eingangswelle relativ zu der Rotorwelle bei der Montage vorgegeben oder zumindest vereinfacht sein. Dadurch kann beispielsweise ein vollständiger Zahneingriff und auch eine gewünschte Positionierung in jeweiligen Lagern sichergestellt sein. Das axiale Positionieren kann beispielsweise vor dem Verstellen der Spannvorrichtung in den Spannzustand und alternativ oder zusätzlich vor dem Fixieren der Wellen aneinander erfolgen. Beispielsweise wird die Eingangswelle bis gegen einen Anschlag in der Rotorwelle eingeschoben. Der Anschlag kann beispielsweise durch korrespondierende Absätze an den beiden Wellen ausgebildet werden. Dadurch können beispielsweise in Umfangsrichtung verlaufende stirnseitig weisende Anlageflächen ausgebildet werden. Der Anschlag kann beispielsweise axial im Bereich der Spannvorrichtung, der formschlüssigen Verbindung und alternativ oder zusätzlich einer Sicherung der beiden Wellen aneinander ausgebildet sein. Dort können die beiden Wellen bereits eine große Wandstärke aufweisen, wodurch der Anschlag einfach integrierbar ist.

In einer Ausführungsform der Getriebeanordnung kann es vorgesehen sein, dass die Welle des Getriebes an der weiteren Welle der Windkraftanlage gelagert ist. Beispielsweise kann die Welle des Getriebes nur an der weiteren Welle der Windkraftanlage gelagert sein. Die Eingangswelle kann in einer Ausführungsform an der Rotorwelle der Windkraftanlage gelagert sein, beispielsweise in dem montierten Zustand der Windkraftanlage. Die Eingangswelle kann in der montierten Windkraftanlage nur an der Rotorwelle der Windkraftanlage gelagert sein. Beispielsweise kann die Rotorwelle über zwei Wälzlager oder Gleitlager an der Gondel gelagert sein. Auf die Rotorwelle können hohe Lasten durch den Rotor wirken, weshalb eine Lagerung nahe an dem Rotor kleinere Lager erlauben kann. Beispielsweise ist die Rotorwelle mit zwei Wälzlagern an der Gondel gelagert. Die Eingangswelle kann dann einfach an der Rotorwelle gelagert werden. Die Welle des Getriebes, wie die Eingangswelle, ist beispielsweise nicht an dem Getriebegehäuse gelagert, beispielsweise weder direkt noch indirekt. Die Rotorwelle kann ein Teil der Getriebeanordnung sein oder als dazu separates Teil angesehen werden. Im unmontierten Zustand ist die Welle des Getriebes beispielsweise nicht wie im betriebsbereiten Zustand gelagert. Beispielsweise wird die Eingangswelle während des Transports zur Montage mit Klemmen, Hülsen, Bolzen, Schrauben oder anderen Klemmelementen an dem Getriebegehäuse fixiert, um ein unerwünschtes Verschieben und auch eine Beschädigung des Getriebes während des Transports zu vermeiden. Bei der Montage kann diese Fixierung gelöst werden und entsprechende Klemmelemente entfernt werden.

Ein zweiter Aspekt betrifft eine Windkraftanlage. Die Windkraftanlage weist eine Getriebeanordnung gemäß dem ersten Aspekt auf. Jeweilige Vorteile und weitere Merkmale sind der Beschreibung des ersten Aspekts zu entnehmen, wobei Ausgestaltungen des ersten Aspekts auch Ausgestaltungen des zweiten Aspekts und umgekehrt bilden. Die Windkraftanlage weist einen Rotor auf. Der Rotor kann mit der Rotorwelle der Windkraftanlage beispielsweise permanent drehfest verbunden sein. Die Eingangswelle des Getriebes, wie der Planetenträger, kann an der Rotorwelle der Windkraftanlage gelagert sein. Beispielsweise kann die Eingangswelle ausschließlich an der Rotorwelle der Windkraftanlage gelagert sein. Keine anderen Lager stützen dann beispielsweise direkt die Eingangswelle. Es kann aber beispielsweise sein, dass die Eingangswelle an deren Verzahnungen und damit Wirkverbindungen mit anderen Drehelementen zusätzlich gestützt wird, beispielsweise durch diese jeweiligen anderen Drehelemente. Die Windkraftanlage kann einen Generator aufweisen. Der Generator kann eine Eingangswelle aufweisen. Die Eingangswelle des Generators kann, wie für den ersten Aspekt beschrieben, durch eine formschlüssige Verbindung permanent drehfest mit der Ausgangswelle des Getriebes verbunden sein. Die Eingangswelle des Getriebes kann, wie für den ersten Aspekt beschrieben, durch eine formschlüssige Verbindung permanent drehfest mit der Rotorwelle verbunden sein. Die Spannvorrichtung kann dazu ausgebildet sein, bei diesen beiden Verbindungen oder nur einer der Verbindungen das Spiel aufzuheben. Dafür kann beispielsweise pro Verbindung, bei welcher das Spiel aufhebbar sein soll, eine Expansionsbuchse vorgesehen sein.

### Kurze Beschreibung der Figuren

Fig. 1 veranschaulicht schematisch eine Windkraftanlage mit einer Getriebeanordnung.
Fig. 2 veranschaulicht schematisch in einer seitlichen Schnittansicht eine Verbindung einer Welle des Getriebes mit einer weiteren Welle der Windkraftanlage bei der Getriebeanordnung, wobei beispielhaft die Verbindung einer Eingangswelle des Getriebes mit einer Rotorwelle der Windkraftanlage gezeigt ist.
Fig. 3 veranschaulicht schematisch in Perspektivansicht eine Spannvorrichtung für diese in Fig. 2 veranschaulichte Verbindung.
Fig. 4 veranschaulicht schematisch in einer seitlichen Schnittansicht Details der Spannvorrichtung.
Fig. 5 veranschaulicht schematisch in einer seitlichen Schnittansicht Details der bereits in Fig. 2 veranschaulichten Verbindung.

### Detaillierte Beschreibung von Ausführungsformen

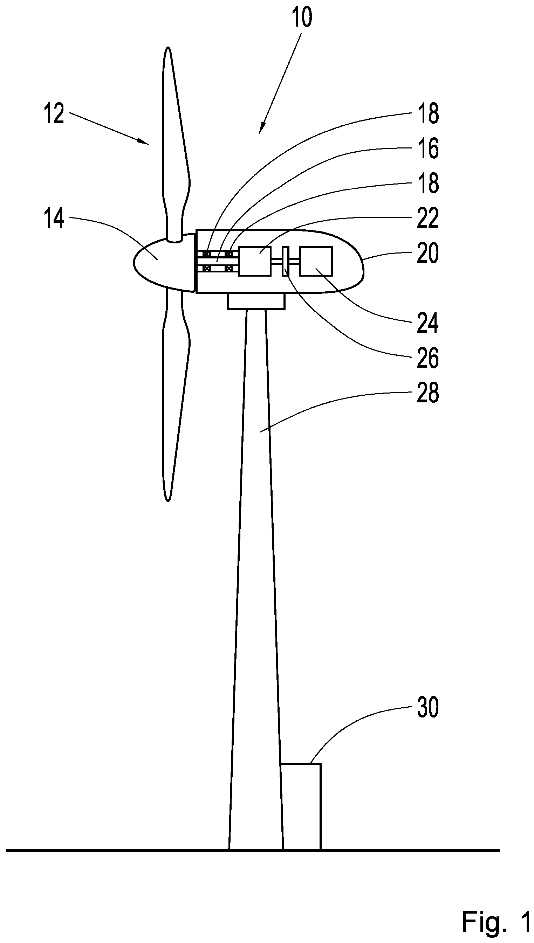

Fig. 1 veranschaulicht eine Windkraftanlage 10 in Horizontalbauweise. Die Windkraftanlage 10 weist einen Rotor 12 auf, welcher über eine Nabe 14 an einer Rotorwelle 16 gehalten ist. Die Drehachse der Rotorwelle 16 erstreckt sich im Wesentlichen horizontal. Die Rotorwelle 16 ist über zwei Wälzlager 18 in einer Gondel 20 gelagert. Die Rotorwelle 16 ist über ein Getriebe 22 mechanisch mit einem Generator 24 wirkverbunden. In der Wirkverbindung zwischen Getriebe 22 und Generator 24 ist eine Bremse 26 angeordnet, welche auf eine Eingangswelle des Generators 24 wirkt. Die Gondel 20 ist drehbar an einem oberen Ende eines Turms 28 gelagert, welcher am Boden verankert ist. Neben dem Turm 28 weist die Windkraftanlage 10 einen Netzanschluss 30 auf.

Windkraftanlagen erfahren einen zunehmenden Leistungszuwachs. Diese Leistung muss durch das Getriebe 22 übertragbar sein. Eine bauraumsparende Bauweise ist für eine kleine Gondel 20 gewünscht. Zudem soll die Windkraftanlage 10 wartbar sein. Bei Windkraftanlagen ist dabei oft eine Stärke einer Verbindung zwischen zwei permanent drehfest miteinander verbundenen Wellen limitierend. Zur Montierbarkeit ist eine Verbindung mit einer Spielpassung oder zumindest einer geringen Pressung gewünscht. Aufgrund der hohen und oft wechselnden an dem Rotor 12 eingeleiteten Biegelasten und Drehmomente ist im Betrieb eine Passung zwischen permanent drehfest miteinander verbundenen Wellen mit geringem Spiel oder sogar eine spielfreie Passung gewünscht. Damit kann eine dynamische Belastung der Verbindung und auch eine sonst oft notwendige Schmierung vermieden werden.

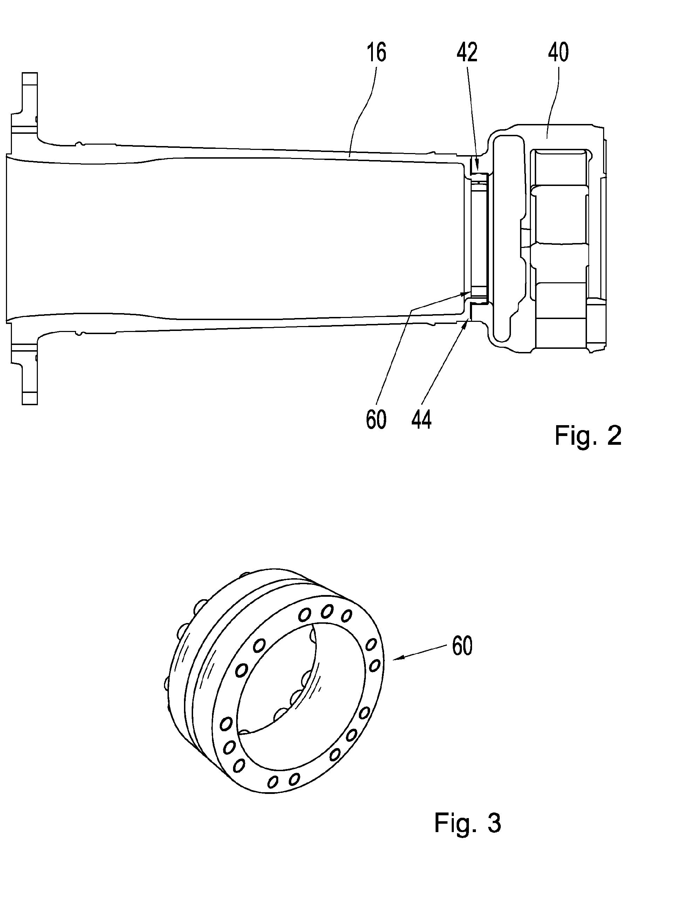

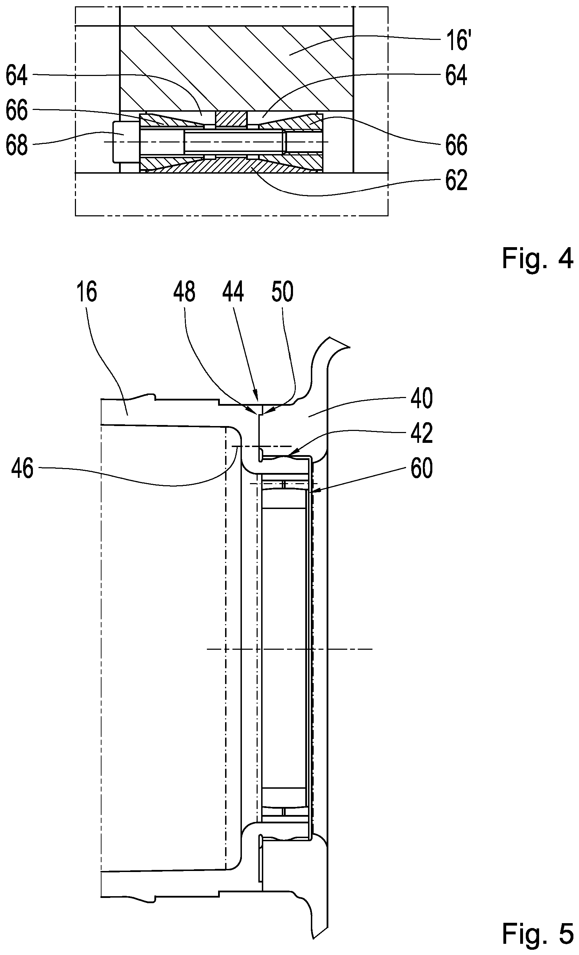

In Fig. 2 ist eine Getriebeanordnung der Windkraftanlage 10 veranschaulicht, welche diese Anforderungen gleichzeitig erfüllen kann. Dies wird dabei am Beispiel einer Verbindung einer Eingangswelle 40 des Getriebes 22 mit der Rotorwelle 16 der Windkraftanlage 10 veranschaulicht. Die jeweiligen Details der Verbindung sind dabei besonders gut in Fig. 5 zu erkennen. Die Eingangswelle 40 ist als Planetenträger eines rotorseitigen Planetenradsatzes des Getriebes 22 ausgebildet. Die Getriebeanordnung und die Prinzipien dieser Verbindung können aber auch auf andere Verbindungen von permanent drehfest miteinander verbundenen Wellen der Windkraftanlage 10 angewandt werden, wie auf die Verbindung einer Ausgangswelle des Getriebes 22 mit einer Eingangswelle des Generators 24.

In Fig. 2 ist zu erkennen, dass die Rotorwelle 16 als Hohlwelle ausgebildet ist und mit einem getriebeseitigen Endbereich in die Eingangswelle 40 des Getriebes 22 eingesteckt ist. Die Rotorwelle 16 weist in diesem Endbereich eine radial außenseitige Steckverzahnung auf. Die Eingangswelle 40 des Getriebes 22 ist als Planetenträger ausgebildet. Die Eingangswelle 40 des Getriebes 22 weist einen rotorseitigen Endabschnitt auf, welcher ebenfalls als hohle Welle ausgebildet ist. Dort weist die Eingangswelle 40 des Getriebes 22 eine radial innenseitige Steckverzahnung auf, welche korrespondierend zu der radial außenseitigen Steckverzahnung der Rotorwelle 16 ausgebildet ist. **In** einem Verbindungsbereich 42 wird durch das Einstrecken der Rotorwelle 16 in die Eingangswelle 40 des Getriebes 22 so eine formschlüssige permanent drehfeste Verbindung ausgebildet. Zur axialen Sicherung der beiden Wellen 16, 40 aneinander ist zudem in einem Flanschbereich 44 der beiden Wellen 16, 40 eine axiale Fixierung durch eine Schraube vorgesehen, welche in Fig. 5 durch eine gestrichelte Linie 46 veranschaulicht ist. Die Verzahnungen und damit auch die formschlüssige Verbindung der beiden Wellen 16, 40 miteinander ist dabei zunächst für die Montage als Spielpassung ausgebildet. Die Eingangswelle 40 des Getriebes 22 ist in der montierten Windkraftanlage 10 nur oder zumindest hauptsächlich über die Rotorwelle 16 gelagert.

In dem Flanschbereich 44 ist zudem ein Absatz in der Rotorwelle 16 und ein korrespondierender Absatz in der Eingangswelle 40 des Getriebes 22 ausgebildet. Dieser Absatz bildet jeweils eine in Umfangsrichtung und axial verlaufende erste Passfläche 48 bei den beiden Wellen 16, 40 aus. Dadurch wird bei dem Verbinden der beiden Wellen 16, 40 bei dem Einschieben der Rotorwelle 16 in die Eingangswelle 40 des Getriebes 22 eine radiale Zentrierung für eine radial zentrierte Positionierung der beiden Wellen 16, 40 relativ zueinander ausgebildet. Dadurch ist die Eingangswelle 16 des Getriebes 22 mit einer hohen Genauigkeit koaxial zu der Rotorwelle 16 ausgerichtet. Zudem bildet dieser Absatz jeweils eine in Umfangsrichtung und axial verlaufende zweite Passfläche 50 bei den beiden Wellen 16, 40 aus. Diese zweite Passfläche 50 bilden einen Anschlag für eine axial definierte Positionierung beiden Wellen 16, 40 relativ zueinander aus. Dadurch kann ein vollständiges Einstecken der Steckverzahnungen sichergestellt werden. Dadurch ist die Positionierung der beiden Wellen 16, 40 zueinander im Bereich der Steckverzahnungen besonders präzise. Die Absätze sind radial weit außen in dem Flanschbereich 44 positioniert. In anderen Ausführungsformen sind die Absätze weiter radial innen und alternativ oder zusätzlich axial beabstandet zu dem Verbindungsbereich 42 angeordnet.

Die Getriebeanordnung weist weiterhin eine Spannvorrichtung 60 auf. Die Spannvorrichtung 60 ist axial im gleichen Bereich wie der Flanschbereich 44 und der Verbindungsbereich 42 angeordnet. Die Spannvorrichtung 60 ist radial innen zu der Rotorwelle 16 und der Eingangswelle 40 des Getriebes 22 angeordnet. Die Spannvorrichtung 60 liegt an der Rotorwelle 16 direkt radial innen an einem die Verzahnung ausbildenden umlaufenden und radial vorstehenden Vorsprung an. Die Spannvorrichtung 60 ist somit radial zu der Eingangswelle 40 des Getriebes 22 durch die Rotorwelle 16 beabstandet.

Die Spannvorrichtung 60 ist dazu ausgebildet, ein Spiel wenigstens in einem Teilbereich der formschlüssigen Verbindung aufzuheben. In dem gezeigten Beispiel presst die Spannvorrichtung 60 dafür von innen gegen den die Verzahnung ausbildenden umlaufenden und radial vorstehenden Vorsprung der Rotorwelle 16. Dadurch wird ein Durchmesser der Rotorwelle 16 in diesem Bereich geringfügig elastisch und in einer Ausführungsform auch plastisch verformt. Dadurch werden die Zähne der Rotorwelle 16 weiter in die Zähne der Eingangswelle 40 des Getriebes 22 radial eingeschoben. Dadurch kommen die Zahnflanken auch in einem Zustand der Windkraftanlage 10, bei welcher kein Drehmoment an dem Rotor 12 eingeleitet wird, in Anlage. Das dort zuvor für die Montage vorhandene Spiel wird zumindest in diesem Bereich aufgehoben. Dabei kann die Rotorwelle 16 so gegen die Eingangswelle 40 des Getriebes 22 gedrückt werden, dass eine Presspassung hergestellt wird.

In den Figs. 3 und 4 sind Details der Spannvorrichtung 60 gezeigt, welche eine Expansionsbuchse aufweist. Die Expansionsbuchse weist einen radial inneren Ring 62 und zwei radial äußere Ringe 64 auf. Die zwei radial äußere Ringe 64 sind in einer Ausführungsform, wie in Fig. 3 gezeigt, in Umfangsrichtung unterbrochen. Diese Ringe 62, 64 nähern sich in einem axialen Mittelbereich der Expansionsbuchse einander keilförmig an. Zwischen den drei Ringen 62, 64 sind zwei Ringe 66 mit keilförmigem Querschnitt mit korrespondierender Neigung angeordnet. Diese zwei keilförmigen Ringe 66 sind über am Umfang gleichmäßig verteilte Spannelemente 68 verbunden, welche hier als Schrauben ausgebildet sind. In einer Ausgangslage weisen die beiden keilförmigen Ringe 66 einen Mindestabstand auf, welcher zu einer maximalen Ausgangsdicke und damit einem maximalen Außenausgangsdurchmesser der Expansionsbuchse korrespondiert. Durch Anziehen der Spannelemente 68, hier also durch Drehen der Schrauben, werden diese beiden mittleren keilförmigen Ringe 66 aufeinander zubewegt. Dadurch werden die radial äußeren Ringe 64 und der radial innere Ring 62 radial auseinander gedrückt. Dadurch vergrößert sich die Dicke und damit ein Außendurchmesser der Expansionsbuchse gegenüber dem Ausgangszustand und die Spannvorrichtung 60 wird in einen Spannzustand verstellt, in welchem diese von innen gegen die Rotorwelle 16 im Verbindungsbereich 42 drückt. Die Spannung kann so stufenlos mechanisch eingestellt werden und korrespondiert zu einer zum Drehen der Schrauben erforderlichen Kraft. In einer weiteren Ausführungsform ist die Expansionsbuchse für eine hydraulische Verstellung ausgebildet.

### Bezugszeichen

- 10: Windkraftanlage
- 12: Rotor
- 14: Nabe
- 16: Rotorwelle
- 18: Wälzlager
- 20: Gondel
- 22: Getriebe
- 24: Generator
- 26: Bremse
- 28: Turm
- 30: Netzanschluss
- 40: Eingangswelle
- 42: Verbindungsbereich
- 44: Flanschbereich
- 46: Linie / Schraube
- 48, 50: Passflächen
- 60: Spannvorrichtung
- 62, 64, 66: Ringe
- 68: Spannelemente

## Patentansprüche

1. Getriebeanordnung für eine Windkraftanlage (10) mit einem Getriebe (22), wobei eine Welle (40) des Getriebes (22) mit einer weiteren Welle (16) der Windkraftanlage (10) in einem montierten Zustand der Windkraftanlage (10) durch eine formschlüssige Verbindung permanent drehfest verbunden ist, und wobei die Getriebeanordnung eine Spannvorrichtung (60) aufweist, welche dazu ausgebildet ist, ein Spiel wenigstens in einem Teilbereich der formschlüssigen Verbindung aufzuheben.

2. Getriebeanordnung nach Anspruch 1, **dadurch gekennzeichnet, dass** die formschlüssige Verbindung durch korrespondierende Verzahnungen der beiden Wellen (16, 40) ausgebildet werden.

3. Getriebeanordnung nach Anspruch 2, **dadurch gekennzeichnet, dass** die Spannvorrichtung (60) dazu ausgebildet ist, das Spiel wenigstens im Bereich von aneinander in Umfangsrichtung benachbarten Zahnflanken der korrespondierenden Verzahnungen aufzuheben.

4. Getriebeanordnung nach einem der vorhergehenden Ansprüche, **dadurch gekennzeichnet, dass** die Spannvorrichtung (60) dazu ausgebildet ist, gegen diejenige der beiden Wellen (16) zu pressen, welche radial benachbart zu der Spannvorrichtung (60) angeordnet ist.

5. Getriebeanordnung nach einem der vorhergehenden Ansprüche, **dadurch gekennzeichnet, dass** die Spannvorrichtung (60) eine Expansionsbuchse aufweist, welche für ein Aufweiten ausgebildet ist.

6. Getriebeanordnung nach einem der vorhergehenden Ansprüche, **dadurch gekennzeichnet, dass** die Expansionsbuchse radial innen zu den beiden Wellen (16, 40) angeordnet ist.

7. Getriebeanordnung nach einem der vorhergehenden Ansprüche, **dadurch gekennzeichnet, dass** die formschlüssige Verbindung wenigstens in dem Teilbereich als eine Spielpassung ausgebildet ist.

8. Getriebeanordnung nach einem der vorhergehenden Ansprüche, **dadurch gekennzeichnet, dass** die Getriebeanordnung eine radiale Zentrierung (48) für eine radial zentrierte Positionierung der beiden Wellen (16, 40) relativ zueinander aufweist.

9. Getriebeanordnung nach einem der vorhergehenden Ansprüche, **dadurch gekennzeichnet, dass** die Getriebeanordnung einen Anschlag (50) für eine axial definierte Positionierung beiden Wellen (16, 40) relativ zueinander aufweist.

10. Getriebeanordnung nach einem der vorhergehenden Ansprüche, **dadurch gekennzeichnet, dass** die Welle (40) des Getriebes (22) an der weiteren Welle (16) der Windkraftanlage (10) gelagert ist.

11. Windkraftanlage (10) mit einer Getriebeanordnung nach einem der vorhergehenden Ansprüche und einem Rotor (12).
